**Europäisches Patentamt**

**European Patent Office**

**Office européen des brevets**

(19)

(11) Veröffentlichungsnummer: **0 184 887**
**A1**

(12) # EUROPÄISCHE PATENTANMELDUNG

(21) Anmeldenummer: **85201999.1**

(22) Anmeldetag: **28.11.85**

(51) Int. Cl.⁴: **F 24 F 12/00,** F 24 F 7/08,
F 24 F 11/00, F 24 D 3/00,
F 24 D 5/04

(30) Priorität: **30.11.84 NL 8403660**

(43) Veröffentlichungstag der Anmeldung: **18.06.86**
**Patentblatt 86/25**

(84) Benannte Vertragsstaaten: **BE DE LU NL**

(71) Anmelder: **SALLAND KOSTER B.V.,**
**Roermondstraat 37005, NL-7418 CP Deventer (NL)**

(72) Erfinder: **Permentier, Robert Jean Louis, Oerdijk 126,**
**NL-Lettele Gem. Diepenveen (NL)**

(74) Vertreter: **van der Beek, George Frans, Ir. et al,**
**Nederlandsch Octrooibureau P.O. Box 29720,**
**NL-2502 LS The Hague (NL)**

(54) **Belüftungsvorrichtung für Gebäude, insbesondere für zugfrei ausgebildete Wohnungen.**

(57) Mit der Belüftungsvorrichtung für Gebäude nach der Erfindung wird beabsichtigt jeder Raum mindestens einmal pro
Stunde vollständig mit frischer Luft zu versehen, in jedem Raum
eine Temperatur individuell einstellen zu können und Wärmeverluste durch Wärmeaustausch zwischen gebrauchter und frischer Luft auf ein Minimum begrenzen zu können. Die Vorrichtung ist mit einer Sammelkammer (4) für frische Luft versehen,
welche über Zuführleitungen (7a-7f) mit einzelnen Räumen des
Gebäudes verbunden ist, einer Sammelkammer (5) für gebrauchte Luft, die über Rückleitungen (8a-8f) mit einer Anzahl
von Räumen verbunden ist, mindestens einer Hauptleitung (2)
für Aussenluft, einer mit einem Abführventilator (12) versehenen Hauptleitung (3) für gebrauchte Luft, einem Hauptwärmeaustauscher (13), welcher die von der Hauptleitung (2) zur Sammelkammer (5) für frische Luft strömende Luft in Wärmeaustausch mit der von der Sammelkammer (5) für gebrauchte Luft
zur Hauptleitung (3) strömenden Luft bringt. Von der Sammelkammer (4) für frische Luft erstreckt sich eine Zuführleitung
(7a-7f) nach jedem der Räume und von der Sammelkammer (5)
für gebrauchte Luft erstreckt sich eine Rückleitung (8a-8f) nach
jedem der Räume. An jede Zuführleitung (7a-7f) sind ein gesonderter Zuführventilator (9a-9f) und eine gesonderte regelbare
Heiz- und/oder Kühlvorrichtung (11a-11f) angeschlossen, wobei
für jedes Gebäude ein besonderes Einstellorgan (25a-25f) für
die Einstellung der Solltemperatur vorgesehen ist.

Belüftungsvorrichtung für Gebäude, insbesondere für zugfrei ausgebildete Wohnungen.

Die Erfindung betrifft eine Belüftungsvorrichtung für Gebäude, insbesondere für zugfrei ausgebildete Wohnungen, welche Vorrichtung mit einer Sammelkammer für frische Luft versehen ist, welche über Zuführleitungen mit einzelnen Räumen des Gebäudes verbunden ist, einer Sammelkammer für gebrauchte Luft, die über Rückleitungen mit einer Anzahl von Räumen verbunden ist, mindestens einer Haptleitung für Aussenluft, einer mit einem Abführventilator versehenen Hauptleitung für gebrauchte Luft, einem Hauptwärmeaustauscher, welcher die von der Hauptleitung zur Sammelkammer für frische Luft strömende Luft in Wärmeaustausch mmit der von der Sammelkammer für gebrauchte Luft zur Hauptleitung strömende Luft bringt. Eine solche Vorrichtung ist aus FR-A-2.264.254 bekannt.

Beim Bau von modernen Wohnungen ist Energieeinsparung eine wichtige Forderung. Wohnungen werden so stark isoliert und zugfrei gemacht, dass das innere Klima nach einem Zeitraum unangenehm wird un zufolge der Ansammelung von Feuchtigkeit die Lebensdauer stark gekürzt wird. Dieselbe Situation stellt sich mehr und mehr auch bei Betriebsgebäuden ein.

Die Erfindung hat zum Ziel, diese Nachteile zu beseitigen und eine Belüftungsvorrichtung für Gebäude zu schaffen, durch welche jeder Raum dauernd genügend belüftet werden kann, um Feuchtigkeit und Komfortprobleme zu vermeiden, jeder Raum gesondert beheizt und/oder gekühlt werden kann, wobei der Temperaturwert des Raumes zentral einstellbar und der Energieverbrauch überraschend niedrig its. Die erfindungsgemäss ausgebildete Belüftungsvorrichtung ist zu diesem Zweck dadurch gekennzeichnet dass eine Sammelkammer für frische Luft eine Zuführleitung nach jedem der Räume und von der Sammelkammer für gebrauchte Luft eine Rückleitung nach jedem der Räume erstreckt, dass an jede Zuführleitung ein besonderer Zuführventilator und eine besondere regelbare Heiz- und/oder Kühlvorrichtung angeschlossen sind, wobei für jedes Gebäude ein besonderes Einstellorgan für die Einstellung der Solltemperatur vorgesehen ist.

Mit dieser Vorrichtung kann erreicht werden, dass jeder Raum mindestens einmal pro Stunde vollständig mit frischer Luft versehen ist, dass in jedem Raum eine individuell eingestellte Temperatur herrscht und dass Wärmeverluste durch Wärmeaustausch zwischen gebrauchter und frischer Luft auf ein Minimum begrenzt werden.

Zur Beheizung der Ventilationsluft kann vorzugsweise ein gebräuchlicher Zentralheizungskessel, eventuell mit einer Abzapfvorrichtung für Warmwasser verwendet werden. Zu diesem Zweck besteht die Heizvorrichtung in jeder Zuführleitung aus einem Wärmeaustauscher, welcher über eine Warmwasserleitung mit einem Zentralheizungskessel verbunden ist, wobei in jeder Leitung zwischen dem Kessel und dem Wärmeaustauscher eine Regelklappe vorgesehen ist, welche in Abhängigkeit von der Differenz zwischen der eingestellten Temperatur und der gemessenen Temperatur gesteuert wird, und zwar entweder der Temperatur im Raum, in welchen die Zuführleitung mündet, oder in der Rückeitung aus diesem Raum.

Im Sommer soll der Hauptwärmeaustauscher möglichst nicht im Betrieb sein. Um zwischen Winter- uns Sommerbetrieb um schalten zu können, kann in der Verbindung zwischen der Hauptzuführleitung und der Sammelkammer für frische Luft oder in der Verbindung zwischen der Sammelkammer für gebrauchte Luft und der Hauptleitung für gebrauchte Luft einem um den Wärmeaustauscher führende Nebenstromleitung (by-pass) vorgesehen sein, und eine Sommer-Winterklappe vorgesehen sein, mit welcher die frische bzw. die gebrauchte Luft entweder durch den Wärmeaustauscher oder um den Wärmeaustauscher herum geleitet werden kann.

Mit Rücksicht darauf, dass ein zentraler Hauptventilator zum Erzielen der gewünschten Abfuhr von Luft aus einem Raum vorgesehen ist, ist es nötig, dass in jeder Rückleitung eine einmalig einzustellende Regelklappe für die Regelung des Luftstromes angebracht ist.

In der Aufheizperiode des Raumes soll die Möglichkeit bestehen, um relativ viel Heizluft dem Raum zuzuführen. Zu diesem Zweck kann der in jeder Zuführleitung vorgesehe Zuführventilator zwei Leistungsbereiche aufweisen.

Auch der Hauptabführventilator hat zwei Leistungsbereiche. Der grössere Bereich ist insbesondere nötig, wenn eine Dampfabzughaube eingeschaltet ist.

An einer gewünschten Stelle, z.B. im Wohnzimmer der Wohnung, befindet sich eine Bedienungstafel, mit welcher das Klima in der ganzen Wohnung geregelt werden kann. Die Bedienungstafel enthält für jeden Raum ein besonderes Schaltorgan für die Umschaltung zwischen Warmventilieren, Kühlventilieren und Temperatureinstellung, wobei Einstellmittel für die Einstellung der Solltemperatur in jedem Raum auf dieser Tafel vorgesehen sind.

Die wichtigste Einheit der erfindungsgemässen Vorrichtung kann ein Gehäuse sein, mit einer Sammelkammer für frische Luft, Stutzen für den Anschluss von Zuführleitungen nach den Räumen, mit den Stutzen in Verbindung stehenden Zuführventilatoren, einer Sammelkammer für gebrauchte Luft, Stutzen für den Anschluss von Rückeleitungen, einer Öffnung zum Anschluss der Hauptzufuhr, einer Öffnung zum Anschluss der Hauptabfuhr, einem Abführventilator und einem Hauptwärmeaustauscher.

Die Erfindung betrifft gleichzeitig eine Wohnung, welche mit einer Belüftungsbeispiel dargestellt ist, näher erläutert.

Figur 1 zeigt eine schematische Darstellung des zentralen Belüftungsgehäuses nach der Erfindung.

Figur 2 zeigt ein Schema der Belüftungsanlage mit der Bedienungstafel.

Die Aufgabe der dargestellten Vorrichtung ist es, in einem jeden Raum eines zugfrei ausgebildeten Gebäudes, insbesondere einer Wohnung, die Luft mindestens einmal pro Stunde auszutauschen und mit Verhältnismässig niedrigem Verbrauch die Temperatur in jedem Raum individuell zentral regeln zu können.

Der Kern der Vorrichtung besteht aus einem thermisch und akustisch isolierten Kasten 1 mit einer Zuführöffnung 2 für Aussenluft und einer Abführöffnung 3 für gebrachte Luft. Die Öffnungen sind an sich durch den Innenraum der Wohnung erstreckende Rohre.

Im Kasten 1 sind eine Sammelkammer 4 für frische Luft und eine Sammelkammer 5 für gebrauchte Luft durch eine Wande 6 voneinander getrennt.

Die Sammelkammer 4 ist durch Zuführleitungen 7a bis 7f mit sechs verschiedenen Räumen, z.B. einer Wohnzimmer-Küche, einem Bad und vier Schlafkammern verbunden. Die Sammelkammer 5 ist durch Rückleitungen 8a bis 8f mit den gleichen Räumen verbunden.

Frische Luft kann aus der Sammelkammer 4 durch die Leitungen 7a bis 7f in die verschiedenen Räume durch einen Zuführventilator 9a bis 9f geblasen werden, wobei die Luft eine Heizvorrichtung 11a bis 11f passiert.

In der Verbindung zwischen der Sammelkammer 5 und der Abführöffnung befindet sich ein Hauptabführventilator 12 und ein Hauptwärmeaustauscher 13.

Die durch die Oeffnung 2 zugeführte frische Luft kann abhängig von der Stellung einer sogenannten Sommer-Winterklappe 14 entweder durch den Hauptwärmeaustauscher 13 oder über eine Nebenstromleitung 15 in die Sammelkammer 4 strömen.

Die Heizvorrichtungen 11a bis 11f bestehen aus Wärmeaustauschern, welche über Leitungen 16a bis 16f mit einem Warmwasser produzierenden Zentralheizungskessel 17 verbunden sind. In jeder der Leitungen 16a bis 16f ist eine modulierende Klappe 18a bis 18f angeordnet.

In jeder der Rückleitungen 8a bis 8f ist eine einmalig einzustellende Regelklappe 19a bis 19f angeordnet.

Im Wohnraum befindet sich eine Bedienungstafel 21 mit deren Hilfe die Temperatur in jedem der Räume eingestellt werrden kann. Die Tafel 21 steht in Verbindung mit einer zentralen Regeleinheit 22, welche die an der Tafel für jeden Raum eingestellte Temperatur mit der durch Temperaturfühler 23a bis 23f in jedem Raum gemessenen Temperatur vergleicht. Sobald der Unterschied bestimmte Werte überschreitet, werden die Regelklappen 18a bis 18f derart bedient, dass sich die Temperatur in jedem Raum der eingestellten Temperatur nähert.

Auf der Tafel ist für jeden Raum ein Schalter 24a bis 24f angebracht, welcher zwischen den folgenden drei Stellungen verstellt werden kann: eine unbeheizte Ventilationsstellung, eine heizende Ventilationsstellung sowie eine Einstellstellung. In der ersten Stellung wird nur ventiliert, und der Zentralheizungskessel ist ausser Betrieb. Wenn sich der Schalter 24a bis 24f in der beheizenden Ventilationsstellung befindet, ist der Kessel im Betrieb, und es wird die betreffende Regelklappe 18 gesteuert. In der Einstellstellung kann mit Hilfe von je einem Potentiometer 25a bis 25f die Solltemperatur in dem betreffenden Raum eingestellt werden. Die Tafel kann mit einer Anzeige 26 versehen sein, um die tatsächliche Temperatur in den Räumen sichtbar zu machen. Ein Schalter 27 dient zur Bedienung der Sommer-Winterklappe 14.

Die Ventilatoren 12 und 9a bis 9f haben jeder zwei Betriebsstellungen.

Die Vorrichtung arbeitet wie folgt:

Im Sommer wird Aussenluft durch den Zuführventilator 9a bis 9f durch die Oeffnung 2, die Nebenstromleitung 15 und die Sammelkammer 4 in die Zuführleitungen 7a bis 7f geleitet und durch die Leitungen in den Räumen der Wohnung verteilt. Der Zentralheizungskessel befindet sich in der Zündflammenstellung, und die Klappen 18a bis 18f sind geschlossen, so dass die Luft nicht erwärmt wird. Aus den Räumen wird durch die Rückleitungen 8a bis 8f, die Sammelkammer 5, den Hauptabführventilator 12 und die Oeffnung 3 Luft abgeführt, wobei die Klappen 19a bis 19f derart einmalig eingestellt sind, dass pro Stunde der gesamte Luftinhalt jedes Raumes ungefähr einmal ausgetauscht wird.

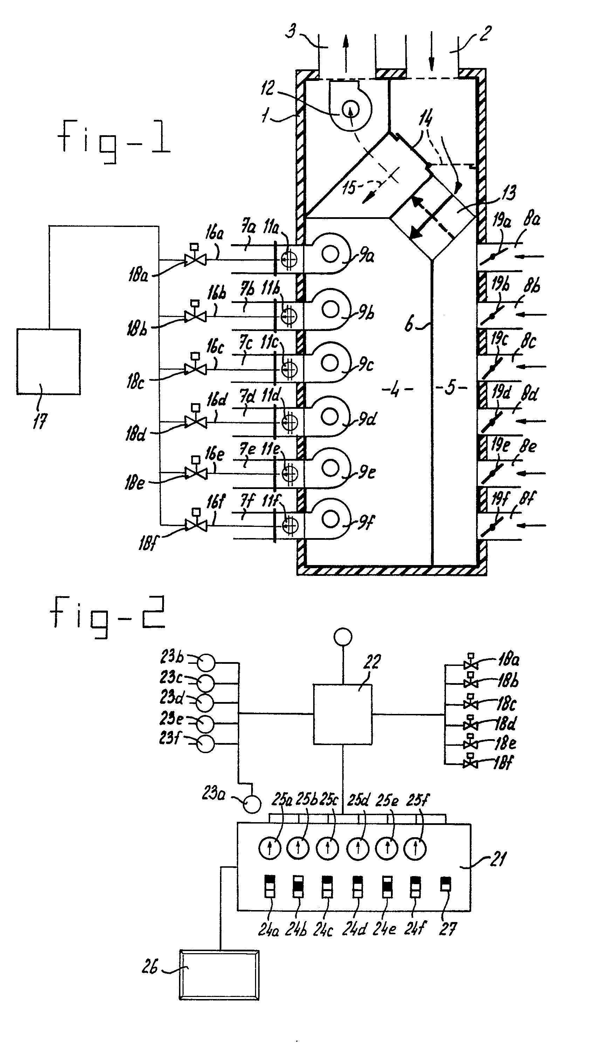

Sobald die Bedürfnis besteht, einen oder mehrere Räume zu beheizen, wird die Sommer-Winterklappe 14 in die in Fig.1 dargestellte Winterstellung geschaltet, und werden die Schalter 24, welche den zu beheizenden Räumen gehören aus der unbeheizten Ventilationsstellung im die beheizende Ventilationsstellung gebracht, wodurch der Zentralheizungskessel 17 in Betrieb gelangt. Die betreffenden Zentralheizungsklappen 18 werden geöffnet,und die betreffenden Zuführventilatoren 9 in die höchste Ventilationsstellung geschaltet. Sobald die Solltemperatur in Räumen erreicht wird, werden die Zuführventilatoren 9 automatisch in den niedrigsten Ventilationsbereich geschaltet,und werden die entsprechenden Zentralheizungsklappen 18 ganz oder teilweise geschlossen.

Da die gebrauchte Luft ihren Wärmeinhalt im Hauptwärmeaustauscher 13 in einem wesentlichen Teil an die frische Luft, die in die Sammelkammer 4 einströmt, abgibt, wird trotz einer optimalen Belüftung mit Aussenluft wenig Energie verloren. Feuchtigkeit wird jedoch durch den Luftaustausch abgeführt.

Sobald die Temperatur im beheizten Raum unter den eingestellten Sollwert sinkt, gibt der betreffende Temperaturfühler 23 ein Signal an die Regeleinheit 22, die ihrerseits ein Signal an die betreffende Zentralheizungsklappe 18 gibt, um sich zu öffnen.

8

Die Sommmer-Winterklappe 14 kann mit einer Frostsicherung versehen sein, d.h., dass sobald die Aussentemperatur unter einen bestimmten Wert (z.B. $2^{\circ}$C) sinkt, ein Servomotor diese Klappe 14 in die Winterstellung bringt, in welcher die Aussenluft durch den Wärmeaustauscher strömen muss. Der Schutz kann ausserdem so wirken, dass, wenn die Aussentemperatur über einen bestimmten Wert steigt (z.B. $18^{\circ}$C), die Sommer-Winterklappe 14 durch ihren Servomotor in die Sommerstellung geschaltet wird.

Die beschriebene Vorrichtung kann mit einer Mehrzahl von Zusätzen versehen werden, ohne den Rahmen des Hauptanspruches zu verlassen. Wenn in der Küche eine Dampfabzughaube in Betrieb gestellt wird, kann vorgesehen werden, dass der Hauptabführventilator 12 in die höchste Stellung geschaltet wird. Beim Unterbruch der elektrischen Speiseleitung kann ein an der Bedienungstafel angeordneter Summer ein Warnsignal bilden. Anderes Warnsignal kann an der Bedienungstafel gebildet werden, wenn durch einen Temperaturfühler 23 festgestellte Temperatur über einen bestimmten Wert (z.B. $55^{\circ}$C) steigt, was auf Brand hinweist. Die Wärmeaustauscher 11a bis 11f können auch an eine Kühleinrichtung an der Stelle eines Heizungskessels angeschlossen werden.

Es wird bemerkt, dass die Temperaturfühler 23a bis 23f auch in den Rückleitungen 8 angeordnet sein können.

0184887

9

Ansprüche

1. Belüftungsvorrichtung für Gebäude, insbesondere zugfrei ausgebildete Wohnungen, welche Vorrichtung mit einer
Sammelkammer (4) für frische Luft versehen ist, welche über
Zuführleitungen (7a bis 7f) mit einzelnen Räumen des Gebäudes verbunden ist, einer Sammelkammer (5) für gebrauchte Luft, die über Rückleitungen (8a bis 8f) mit einer Anzahl von Räumen verbunden ist, mindestens einer Hauptleitung (2) für Aussenluft, einer mit einem Abführventilator
(12) versehenen Hauptleitung (3) für gebrauchte Luft, einem
Hauptwärmeaustauscher (13), welcher die von der Hauptleitung (2) zur Sammelkammer (5) für frische Luft strömende
Luft in Wärmeaustausch mit der von der Sammelkammer (5)
für gebrauchte Luft zur Hauptleitung (3) strömende Luft
bringt, d a d u r c h g e k e n n z e i c h n e t, dass
sich von der Sammelkammer (4) für frische Luft eine Zuführleitung (7a bis 7f) nach jedem der Räume und von der
Sammelkammer (5) für gebrauchte Luft eine Rückleitung (8a
bis 8f) nach jedem der Räume erstreckt, dass an jede Zuführleitung (7a bis 7f) ein besonderer Zuführventilator (9a
bis 9f) und eine besondere regelbare Heiz- und/oder Kühlvorrichtung (11a bis 11f) angeschlossen sind, wobei für
jedes Gebäude ein besonderes Einstellorgan (25a bis 25f)
für die Einstellung der Solltemperatur vorgesehen ist.

2. Belüftungsvorrichtung nach Anspruch 1, d a d u r c h
g e k e n n z e i c h n e t, dass die Heizvorrichtung (11a
bis 11f) in jeder Zuführleitung (7a bis 7f) aus einem Wärmeaustauscher besteht, welcher über eine Warmwasserleitung mit einem Zentralheizungskessel verbunden ist, wobei in jeder Leitung zwischen dem Kessel und dem Wärmeaustauscher eine Regelklappe (18a bis 18f) vorgesehen ist, welche in Abhängigkeit von der Differenz zwischen der eingestellten Temperatur und der gemessenen Temperatur gesteuert wird, und zwar entweder der Temperatur im Raum, in welchen die Zuführleitung (7a bis 7f) mündet, oder in der Rückleitung (8a bis 8f) aus diesem Raum.

3. Belüftungsvorrichtung nach Anspruch 1 oder 2, d a - d u r c h   g e k e n n z e i c h n e t, dass in der Verbindung zwischen der Hauptleitung (2) und der Sammelkammer (4) für frische Luft oder in der Verbindung zwischen der Sammelkammer (5) für gebrauchte Luft und der Hauptleitung (3) für gebrauchte Luft eine um den Wärmeaustauscher (13) führende Nebenstromleitung (15) (by-pass) vorgesehen ist, und dass eine Sommer-Winterklappe (14) vorgesehen ist, mit welcher die frische bzw. die gebrauchte Luft entweder durch den Wärmeaustauscher (13) oder um den Wärmeaustauscher (13) herum geleitet werden kann.

4. Belüftungsvorrichtung nach einem der vorangehenden Ansprüche, d a d u r c h   g e k e n n z e i c h n e t, dass in jeder Rückleitung (8a bis 8f) eine einmalig einzustellende Regelklappe (19a bis 19f) für die Regelung des Luftstromes angebracht ist.

5. Belüftungsvorrichtung nach einem der vorangehenden Ansprüche, d a d u r c h   g e k e n n z e i c h n e t, dass der in jeder Zuführleitung (7a bis 7f) angeordnete Zuführventilator (9a bis 9f) zwei Leistungsbereiche hat.

6. Belüftungsvorrichtung nach einem der vorangehenden Ansprüche, d a d u r c h   g e k e n n z e i c h n e t, dass

11

der Hauptabführventilator (12) zwei Leistungsbereiche hat.

7. Belüftungsvorrichtung nach einem der vorangehenden Ansprüche, g e k e n n z e i c h n e t durch eine Bedienungstafel, welche für jeden Raum ein besonderes Schaltorgan (24a bis 24f) für die Umschaltung zwischen Warmventilieren, Kühlventilieren und Temperatureinstellung enthält, wobei die erwähnten Einstellmittel (25a bis 25f) für die Einstellung der Solltemperatur in jedem Raum auf dieser Tafel vorgesehen sind.

8. Gehäuse mit einer Sammelkammer (4) für frische Luft, Stutzen für den Anschluss von Zuführleitungen (7a bis 7f) nach den Räumen, mit den Stutzen in Verbindung stehenden Zuführventilatoren (9a bis 9f), einer Sammelkammer (5) für gebrauchte Luft, Stutzen für den Anschluss von Rückleitungen (8a bis 8f), einer Oeffnung (2) zum Anschluss der Hauptzufuhr, einer Oeffnung (3) zum Anschluss der Hauptabfuhr, einem Abführventilator (12) und einem Hauptwärmeaustauscher (13), welches Gehäuse bestimmt ist für die Belüftungsvorrichtung nach einem der vorangehenden Ansprüche.

9. Wohnung versehen mit der Belüftungsvorrichtung nach einem der Ansprüche 1 bis 7.

fig-1

fig-2

0184887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y,D | FR-A-2 264 254  (SACRISPEYRE)  <br><br> * Figuren 2-4; Seite 3, Zeile 30 - Seite 4, Zeile 38 * | 1-3,8, 9 | F 24 F 12/00 <br> F 24 F 7/08 <br> F 24 F 11/00 <br> F 24 D 3/00 <br> F 24 D 5/04 |
| A | | 5,6 | |
| | --- | | |
| Y | GB-A-1 143 952  (RADIATION) <br><br> * Figuren; Seite 2, Zeilen 38-43 * | 1-3,8, 9 | |
| A | | 5,7 | |
| | --- | | |
| Y | CH-A- 476 267  (FORDSMAND) <br><br> * Figur 1; Spalte 2, Zeilen 13-30 * | 1-3,8, 9 | RECHERCHIERTE SACHGEBIETE (Int. Cl.4) |
| | --- | | |
| A | FR-A- 387 949  (FOUCHE) <br> * Figuren; Seite 1, Zeilen 58-60 * | 4 | F 24 D <br> F 24 F <br> B 63 J |
| | --- | | |
| A | GB-A-2 134 648  (MITSUBISHI) <br><br> * Figur 2; Seite 1, Zeilen 66-92 * | | |
| | --- | | |
| A | EP-A-0 044 560  (ELTREVA) <br> * Figur 2; Seiten 7-9 * | 1,3 | |
| | ----- | | |

Der vorliegende Recherchenbericht wurde für alle Patentansprüche erstellt.

| Recherchenort <br> DEN HAAG | Abschlußdatum der Recherche <br> 05-03-1986 | Prüfer <br> PESCHEL G. |
|---|---|---|